# EUROPEAN PATENT APPLICATION

(11) **EP 3 764 078 A1**
(43) Date of publication of application: **13.01.2021**
(21) Application number: 19764753.0
(22) Date of filing: 17.01.2019
(51) Int. Cl.: G01N 21/01, G01N 1/28, G01N 21/3577, G01N 21/3586

(54) **LIQUID FILM GENERATION DEVICE AND LIQUID FILM CARTRIDGE FOR USE THEREIN**

(30) Priority: 05.03.2018 JP 2018038474
(71) Applicant: Femto Deployments Inc., Okayama-shi, Okayama 700-0082 (JP)
(72) Inventor: WATANABE Akira, Okayama-shi, Okayama 700-0082 (JP); OKUNO Tadashi, Okayama-shi, Okayama 700-0016 (JP); UEDA Takeji, Okayama-shi, Okayama 701-0212 (JP); DOI Bunpei, Okayama-shi, Okayama 700-0818 (JP)
(74) Representative: Vossius & Partner Patentanwälte Rechtsanwälte mbB
(86) International application number: PCT/JP2019/001183
(87) International publication number: WO 2019/171772

(57) **Abstract**

A liquid film cartridge includes: a nozzle section 10 which ejects a foamable solution 100 and generates a liquid film in a space; and a liquid leading section 20 which leads the foamable solution 100 to the nozzle section 10, in which when an outermost portion of a liquid ejecting port 11 of the nozzle section 10 and an inner wall 21 of the liquid leading section 20 are disposed with a gap therebetween so as to satisfy a condition of a predetermined separation relationship, a distance from the inner wall 21 generating air bubbles 103 to the liquid ejecting port 11 in the liquid leading section 20 corresponding to a flow path immediately before the foamable solution 100 reaches the nozzle section 10 is increased and the amount of the air bubbles 103 entering from the liquid leading section 20 into the nozzle section 10 can be reduced.

## Description

### Technical Field

The present invention relates to a liquid film generation device and a liquid film cartridge using the same and particularly to a device generating a liquid film as a liquid sample from a liquid in a system for measuring characteristics of the electromagnetic waves transmitted through or reflected by a liquid sample by disposing the liquid sample in a path transmitting electromagnetic waves.

### Background Art

Conventionally, a spectroscopic device that measures characteristics of a material using electromagnetic waves such as ultraviolet rays, infrared rays, microwaves, and terahertz waves has been provided. Spectroscopy is classified into several methods according to the physical quantity measured by electromagnetic waves, but there are absorption spectroscopy and reflection spectroscopy among them. In the absorption spectroscopy, electromagnetic waves are transmitted through a sample corresponding to a spectroscopic measurement target and the physical or chemical property of the sample is measured from a change in electromagnetic wave caused by the interaction between the sample and the electromagnetic waves transmitted through the sample. Further, the reflection spectroscopy is used for spectroscopic measurement of a material that does not transmit light, a material that scatters light, or the like and measures the properties of the sample by observing the reflected light from the sample surface.

Light absorption of the material occurs when the photon energy matches the energy structure of the material. For this reason, it is necessary to select different light sources and measurement technologies according to the phenomenon or structure to be observed for the sample corresponding to the measurement target. In general, electromagnetic waves with short wavelengths (such as ultraviolet rays, infrared rays, and visible rays) are suitable for capturing small structures and strong interactions and electromagnetic waves with long wavelengths (such as terahertz waves) are suitable for capturing large structures and weak interactions. Terahertz time-domain spectroscopy (THz-TDS) is a spectroscopic method that obtains information on the amplitude and phase of a terahertz wave by Fourier-transforming a time waveform of an electromagnetic wave obtained by directly measuring the waveform of the terahertz wave.

A material to be used as a sample for spectroscopic measurement has various forms such as gas, solid, and liquid. A method of installing a material to be measured has been devised so that electromagnetic waves can be appropriately transmitted or reflected according to each form. For example, in order to perform highly accurate measurement on a liquid sample, the sample disposed in the spectroscopic device needs to be thin so that electromagnetic waves can be appropriately transmitted or reflected. Particularly when spectroscopically measuring a liquid sample such as an aqueous solution with terahertz waves, since the absorption effect of terahertz waves by water molecules is strong, it is necessary to make a liquid into a plate-shaped uniform thin film and transmit or reflect the terahertz waves to a plate-shaped portion for measurement in order to prevent deterioration of an SN ratio of a measurement signal.

In general, when measuring a liquid sample by absorption spectroscopy, the sample is sandwiched by a container (generally called a solution cell) formed of a material that transmits electromagnetic waves such as glass, the electromagnetic waves are incident from the outside of the solution cell, and the electromagnetic waves transmitted through the solution cell are measured. However, when the liquid sample is measured with the solution cell sandwiched therebetween, the spectral information of the cell material is superimposed on the spectral information of the liquid sample as noise and hinders the measurement of true spectral information.

Conventionally, in view of such a problem, a device capable of measuring spectral information with less noise without using a solution cell has been proposed (for example, see Patent Documents 1 to 3). In the device described in Patent Documents 1 to 3, a thin flat plate-shaped liquid film is generated by ejecting a liquid sample from a nozzle by a pressure of a pump using the nozzle that directly forms the liquid sample into a thin film.

Particularly, in order to solve a problem that when a liquid is pressurized by the pump and is ejected from the nozzle, the liquid scatters from an opening portion of the nozzle due to air bubbles contained in the ejected liquid, the liquid film generation device described in Patent Document 3 brings the liquid film generated by ejecting the liquid, which is sucked from a recovery tank by the pump and pressurized, from the nozzle into contact with a slope wall along the surface of the liquid film, and recovers and stores the liquid flowing down from the slope wall in the recovery tank.

However, the structure of Patent Document 3 described above is particularly effective when the liquid stored in the recovery tank is a liquid having no foamable property. In contrast, for example, when using a foamable solution such as a carbonated beverage containing carbon dioxide as a sample, since the solution itself originally contains a large amount of a gas, it is difficult to shape a thin film having a stable solution surface suitable enough for spectroscopic measurement even when the structure described in Patent Document 3 described above is used.

That is, when a foamable solution that dissolves a gas becomes a thin film by the method described in Patent Documents 1 to 3, air bubbles derived from a gas dissolved in the solution are generated from the inner wall of the container that holds the solution and the inner wall of the tube that carries the solution to the liquid film generation nozzle. Then, since the air bubbles flow into the liquid film generation nozzle, a turbulence of a flow occurs at a nozzle port and bumping or atomization of the solution occurs in the vicinity of a nozzle outlet. For that reason, it is not possible to obtain a thin film of which a surface of a liquid is flat and stable enough for spectroscopic measurement.
Patent Document 1: JP-A-2011-127950
Patent Document 2: JP-A-2015-219088
Patent Document 3: JP-A-2017-146291

### Summary of the Invention

### Technical Problem

The invention has been made to solve such a problem and an object of the invention is to stably generate a thin and flat liquid film appropriately transmitting or reflecting electromagnetic waves even when a foamable solution is used as a sample of spectroscopic measurement.

### Solution to Problem

In order to solve the above-described problems, the invention includes a nozzle section which ejects a liquid (which is foamable or not) and generates a plate-shaped liquid film having a flat surface in a space and a liquid leading section which leads the liquid to the nozzle section and an outermost portion of a liquid ejecting port corresponding to an opening ejecting a liquid in the nozzle section and an inner wall of the liquid leading section are disposed with a gap therebetween so as to satisfy a condition of a predetermined separation relationship.

### Advantageous Effects of the Invention

A foamable solution that dissolves a gas is led from the liquid leading section toward the nozzle section and is ejected from the liquid ejecting port of the nozzle section so that a plate-shaped liquid film having a flat surface is generated in a space. At this time, gas molecules gather and grow into air bubbles due to the interaction between the inner wall of the liquid leading section and the foamable solution and the air bubbles adhere to the inner wall. The air bubbles adhering to the inner wall become larger by being combined with the surrounding air bubbles and move along the flow of the foamable solution. Here, the generation amount of the air bubbles becomes larger as it goes toward the inner wall and becomes smaller as it goes away from the inner wall. That is, it can be said that the bubbling of the foamable solution at the center portion of the liquid leading section is small.

In contrast, according to the invention with the above-described configuration, since a distance from the inner wall to the liquid ejecting port in the liquid leading section corresponding to the flow path immediately before the foamable solution reaches the nozzle section is increased, the foamable solution flowing in the vicinity of the center of the liquid leading section where the linear flow velocity of the liquid is the fastest and is less affected by the inner wall predominantly reaches the nozzle section. As described above, the foamable solution flowing in the vicinity of the center contains almost no air bubbles. Further, according to the structure of the invention, since the distance from the inner wall of the liquid leading section generating the air bubbles to the liquid ejecting port is increased, there is a high possibility that the air bubbles are absorbed into the foamable solution again while the air bubbles generated in the inner wall move to the liquid ejecting port of the nozzle section. Accordingly, it is possible to reduce the amount of the air bubbles entering from the liquid leading section into the nozzle section and to stably generate a thin and flat liquid film appropriately transmitting or reflecting electromagnetic waves even in the foamable solution. Note that, a thin and flat liquid film appropriately transmitting or reflecting electromagnetic waves can be stably generated since almost no air bubbles are originally contained in a solution when a liquid which is not foamable is used.

### Brief Description of the Drawings

Fig. 1 is a diagram illustrating a configuration example of a liquid film cartridge according to this embodiment.
Fig. 2 is a diagram illustrating a configuration example of a liquid film generation device using the liquid film cartridge according to this embodiment.
Fig. 3 is a diagram illustrating a configuration example of the liquid film generation device using the liquid film cartridge according to this embodiment.
Fig. 4 is a diagram illustrating a configuration example of the liquid film generation device using the liquid film cartridge according to this embodiment.
Fig. 5 is a diagram illustrating a configuration example of the liquid film generation device using the liquid film cartridge according to this embodiment.
Fig. 6 is a diagram illustrating a configuration example of the liquid film generation device using the liquid film cartridge according to this embodiment.
Fig. 7 is a diagram illustrating a configuration example of the liquid film generation device using the liquid film cartridge according to this embodiment.
Fig. 8 is a diagram illustrating a configuration example of the liquid film generation device using the liquid film cartridge according to this embodiment.
Fig. 9 is a diagram illustrating a configuration example of the liquid film generation device using the liquid film cartridge according to this embodiment.
Fig. 10 is a diagram illustrating a configuration example of the liquid film generation device using the liquid film cartridge according to this embodiment.
Fig. 11 is a diagram illustrating another configuration example of the liquid film cartridge according to this embodiment.
Fig. 12 is a diagram illustrating another configuration example of the liquid film generation device using the liquid film cartridge according to this embodiment.

### Mode for Carrying Out the Invention

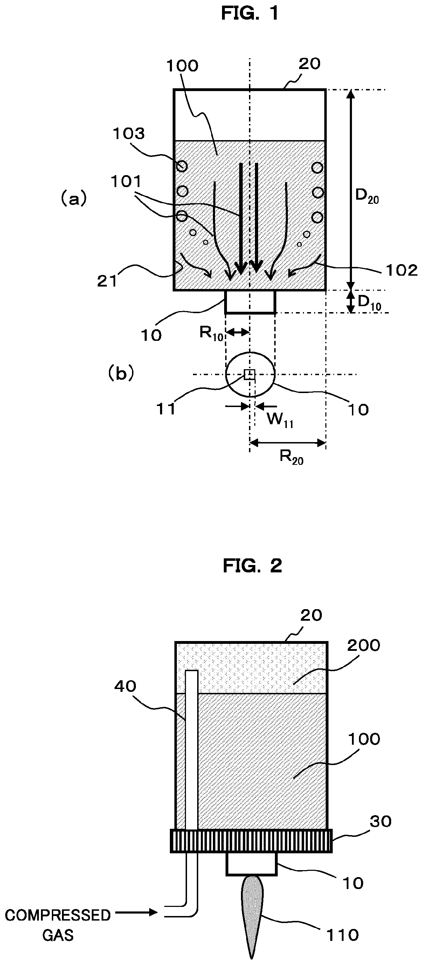

Hereinafter, an embodiment of the invention will be described with reference to the drawings. Fig. 1 is a diagram illustrating a configuration example of a liquid film cartridge according to this embodiment, where (a) is an entire front view and (b) is a bottom view of a nozzle section. The liquid film cartridge of this embodiment is used in a spectroscopic device (for example, a terahertz time domain spectroscopic device) in which a liquid sample is disposed in a path through which electromagnetic waves are transmitted and which measures characteristics of the electromagnetic waves transmitted through or reflected by the liquid sample and generates a plate-shaped sample liquid film having a flat surface in a space by ejecting a foamable solution that dissolves a gas, a non-foamable solution that does not dissolve a gas, or other liquids from a nozzle section. Hereinafter, a description will be made on the assumption that a sample liquid film is generated by using a foamable solution.

As illustrated in Fig. 1, the liquid film cartridge of this embodiment includes a nozzle section 10 which ejects a foamable solution and generates a plate-shaped liquid film having a flat surface in a space and a liquid leading section 20 which leads a foamable solution 100 to the nozzle section 10.

As indicated by an arrow in Fig. 1, the foamable solution 100 inside the liquid leading section 20 flows from an upper surface side without the nozzle section 10 toward a bottom surface side with the nozzle section 10. The nozzle section 10 is a pipe body having a predetermined length (depth) D₁₀ in a direction parallel to a direction in which the foamable solution 100 flows through the liquid leading section 20. Further, the liquid leading section 20 is a tubular solution supply structure which is connected to the pipe body constituting the nozzle section 10 and has a predetermined length (depth) D₂₀ in a direction in which the foamable solution 100 flows. The length D₁₀ of the nozzle section 10 is shorter than the length D₂₀ of the liquid leading section 20 (D₁₀ < D₂₀).

The pipe body constituting the nozzle section 10 is formed in a cylindrical shape. Similarly, the solution supply structure constituting the liquid leading section 20 is also formed in a cylindrical shape. A radius R₁₀ of a circular cross-section of the nozzle section 10 is smaller than a radius R₂₀ of a circular cross-section of the liquid leading section 20 (R₁₀ < R₂₀). Note that, the shapes of the nozzle section 10 and the liquid leading section 20 may not be circular. For example, each of the nozzle section 10 and the liquid leading section 20 may be a tubular body having a polygonal cross-section.

The nozzle section 10 is disposed in the vicinity of the center of the cross-section perpendicular to a direction in which the foamable solution 100 flows through the liquid leading section 20 (preferably and accurately disposed at the center position). The connection between the nozzle section 10 and the liquid leading section 20 may be a connection while both portions are integrally formed with each other or may be a connection while the nozzle section 10 is attachable to or detachable from the liquid leading section 20.

An opening which communicates with the solution supply structure of the liquid leading section 20 is formed at one end of the pipe body constituting the nozzle section 10. This opening has a circular shape in which a radius is R₁₀. Accordingly, the foamable solution 100 which flows through the liquid leading section 20 from the upper surface side to the bottom surface side is led from the opening toward the nozzle section 10.

A liquid ejecting port 11 which is smaller than the opening of one end is formed at the other end of the pipe body constituting the nozzle section 10. Accordingly, the foamable solution 100 which is led to the nozzle section 10 is ejected from the liquid ejecting port 11 toward the outside. The liquid ejecting port 11 is provided at the center position of the bottom surface of the nozzle section 10. The shape of the liquid ejecting port 11 is, for example, a square shape, but may be a rectangular shape. However, it is necessary to form the liquid ejecting port 11 in a shape in which an ejected liquid becomes a plate-shaped liquid film when a liquid is ejected from the liquid ejecting port 11.

As described above, since the liquid leading section 20 is a tubular body having a predetermined length D₂₀, the foamable solution 100 flows therethrough almost linearly from the upper surface side toward the bottom surface side. The term "substantially linear" means that the foamable solution 100 does not flow linearly as a linear flow 101 parallel to the side surface of the liquid leading section 20 in all regions of the liquid leading section 20.

That is, the foamable solution 100 flowing in the vicinity of the center of the liquid leading section 20 flows toward the nozzle section 10 connected to the vicinity of the center of the liquid leading section 20 as the linear flow 101. In contrast, the foamable solution 100 flowing in the vicinity of the periphery of the liquid leading section 20 flows as a linear flow 102 directed from the vicinity of the periphery of the liquid leading section 20 toward the nozzle section 10 in the vicinity of the center as it goes toward the bottom surface of the liquid leading section 20.

The linear flow 101 flowing in the vicinity of the center of the liquid leading section 20 is hardly affected by an inner wall 21 of the liquid leading section 20 and the linear flow velocity becomes the fastest. For this reason, the foamable solution 100 which flows in the vicinity of the center of the liquid leading section 20 as the linear flow 101 predominantly reaches the nozzle section 10.

On the other hand, in a region near the inner wall 21 of the liquid leading section 20, gas molecules of the foamable solution 100 gather and grow into air bubbles 103 due to the interaction between the inner wall 21 and the foamable solution 100 flowing through the liquid leading section and the air bubbles 103 adhere to the inner wall 21. The air bubbles 103 adhering to the inner wall 21 become larger by being combined with the surrounding air bubbles 103 and move from the upper surface side toward the bottom surface side along the flow of the foamable solution 100. Here, the generation amount of the air bubbles 103 becomes larger as it goes toward the inner wall 21 and becomes smaller as it goes away from the inner wall 21. That is, it can be said that the bubbling of the foamable solution 100 at the center portion of the liquid leading section 20 is small.

In order to reduce the amount of the air bubbles 103 flowing into the liquid ejecting port 11 of the nozzle section 10, it is preferable that the liquid ejecting port 11 and the inner wall 21 of the liquid leading section 20 be separated from each other with a gap therebetween. Therefore, in this embodiment, the outermost portion of the liquid ejecting port 11 ejecting the foamable solution 100 in the nozzle section 10 and the inner wall 21 (side wall) of the liquid leading section are disposed with a gap therebetween so as to satisfy a condition of a predetermined separation relationship.

Specifically, a size of the liquid leading section 20 in one direction is set to be larger than a size of the liquid ejecting port 11 in one direction in order to satisfy a condition (corresponding to a first condition of claims) that a ratio between a size from the center of the liquid ejecting port 11 of the nozzle section 10 to the outermost portion in one direction perpendicular to the flow direction of the foamable solution 100 (a size from the center of the liquid ejecting port 11 to the outermost portion in a direction toward the outermost portion within a plane perpendicular to the flow direction of the foamable solution 100) and a size from the center of the liquid leading section 20 to the inner wall 21 in one direction (a size from the center of the liquid leading section 20 to the inner wall 21 in a direction toward the inner wall 21 within a plane perpendicular to the flow direction of the foamable solution 100) is larger than a predetermined ratio. Accordingly, the internal volume of the liquid leading section 20 leading the foamable solution 100 to the nozzle section 10 is increased.

For example, on the assumption that a length of one side of the square liquid ejecting port 11 is indicated by 2W₁₁, a ratio with respect to a distance from the center (which is also the center of the liquid leading section 20) to the inner wall 21 of the liquid leading section 20 (a radius R₂₀ of the liquid leading section 20) is "R₂₀/W₁₁ > 10". In this case, a "size from the center of the liquid ejecting port 11 of the nozzle section 10 to the outermost portion in one direction perpendicular to the flow direction of the foamable solution 100" is W₁₁ and a "size from the center of the liquid leading section 20 to the inner wall 21 in one direction" is R₂₀. Note that, a "size from the center of the liquid ejecting port 11 of the nozzle section 10 to the outermost portion in one direction perpendicular to the flow direction of the foamable solution 100" is (long side length/2) if the liquid ejecting port 11 is a rectangular opening.

When the liquid film cartridge is configured in this way, a distance from the inner wall 21 to the liquid ejecting port 11 is increased in the liquid leading section 20 which is a flow path immediately before the foamable solution 100 reaches the nozzle section 10.

As described above, the foamable solution 100 flowing in the vicinity of the center of the liquid leading section 20 contains almost no air bubbles 103. Further, even when the foamable solution 100 flowing in the vicinity of the periphery of the liquid leading section 20 flows toward the nozzle section 10 in the vicinity of the center as it goes toward the bottom surface of the liquid leading section 20, there is a high possibility that the air bubbles 103 are absorbed into the foamable solution 100 again while the air bubbles 103 generated in the inner wall 21 move to the nozzle section 10 along the flow. Accordingly, it is possible to reduce the amount of the air bubbles 103 entering from the liquid leading section 20 into the nozzle section 10. As a result, it is possible to stably generate a thin and flat liquid film causing electromagnetic waves to be appropriately transmitted or reflected even when a liquid used as a sample is the foamable solution 100.

For example, when a length of one side of the liquid ejecting port 11 of the nozzle section 10 is set to 0.6 mm and an inner diameter of the liquid leading section 20 is set to be sufficiently larger than 6 mm, it is possible to suppress the air bubbles 103 generated in the inner wall 21 of the liquid leading section 20 from flowing into the nozzle section 10 and causing bumping at the liquid ejecting port 11 and to stably generate a thin and flat liquid film.

Note that, in order to further reduce the amount of the air bubbles 103 adhering to the inner wall 21 of the liquid leading section 20 and flowing into the liquid ejecting port 11 of the nozzle section 10, it is preferable that the length D₁₀ of the nozzle section 10 be larger than the size W₁₁ of the liquid ejecting port 11 in one direction so as to satisfy a condition that a ratio between the size W₁₁ of the liquid ejecting port 11 of the nozzle section 10 in one direction and the size (the length (depth) D₁₀ of the nozzle section 10) of the nozzle section 10 in a direction perpendicular to one direction is smaller than a predetermined ratio. For example, "D₁₀/W₁₁ < 20" is preferable.

Figs. 2 to 7 are diagrams illustrating a configuration example of a liquid film generation device using the liquid film cartridge having the above-described configuration. The liquid film generation device of this embodiment further includes pressurizing means for pressurizing the foamable solution 100 in the liquid leading section 20 and ejecting the foamable solution from the nozzle section 10 in addition to the liquid film cartridge of this embodiment. Among these, Figs. 2 to 4 illustrate a configuration in which a compressed gas supply device supplying a compressed gas to the liquid leading section 20 is used as an example of the pressurizing means.

In Fig. 2, the liquid leading section 20 is formed as a cylindrical container that stores the foamable solution 100. One end of the container is opened and the other end thereof is closed. A nozzle attachment cap 30 is detachably attached to the opening portion of the liquid leading section 20. The nozzle section 10 is provided at the center portion of the bottom surface of the nozzle attachment cap 30.

When the opening portion of the liquid leading section 20 is directed upward while the nozzle attachment cap 30 is detached, the container of the liquid leading section 20 can be filled with the foamable solution 100. After filling the foamable solution 100 by an amount that the container is not full, the nozzle attachment cap 30 is attached and the top and bottom are inverted so that the nozzle attachment cap 30 faces downward (the direction of gravity). Accordingly, the foamable solution 100 is accumulated in a lower portion of the liquid leading section 20 below which the nozzle attachment cap 30 exists.

A through-hole is provided in the nozzle attachment cap 30 and a gas supply pipe 40 is inserted therethrough. The gas supply pipe 40 has a length in which a front end thereof reaches the vicinity of the closed opening portion (the bottom surface) of the liquid leading section 20 when the gas supply pipe is inserted into the liquid leading section 20. A compressed gas 200 can be sent from an external compressed gas supply device (not illustrated) into the liquid leading section 20 through the gas supply pipe 40. Due to the pressure of the compressed gas 200 sent to the liquid leading section 20, the foamable solution 100 stored in the liquid leading section 20 is led to the nozzle section 10 and the foamable solution 100 is ejected from the nozzle section 10 so that the liquid film 110 is generated.

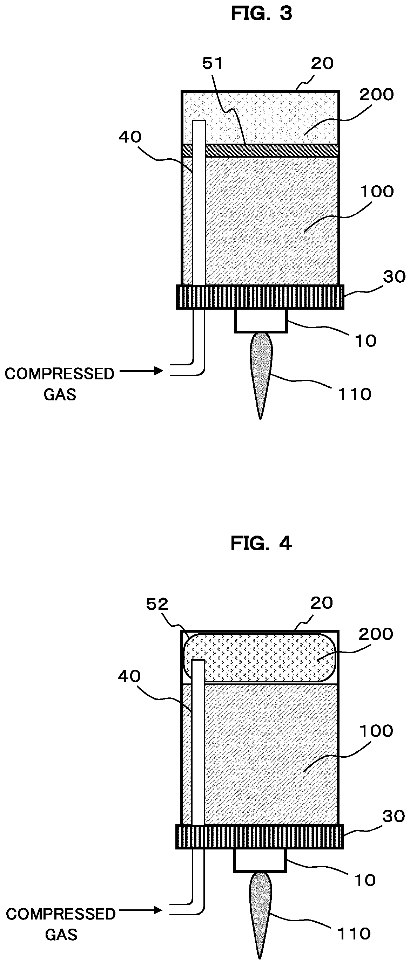

Fig. 3 is a diagram illustrating an example in which a gas separation film 51 for preventing dissolution of gas molecules is disposed at the interface between the foamable solution 100 and the compressed gas 200 in the configuration illustrated in Fig. 2. Generally, when a solution comes into contact with a gas, gas molecules are dissolved in the solution according to the partial pressure of the gas. Assuming that a target sample whose characteristics are measured by spectroscopy is the foamable solution 100 such as a carbonated drink, even when the compressed gas 200 sent to the liquid leading section 20 is a carbon dioxide gas or other than the carbon dioxide gas, that gas dissolves in the foamable solution 100 and changes the characteristics of the foamable solution 100 to be measured.

In order to prevent this, the gas separation film 51 is disposed as a layer of a liquid film that is not combined with the foamable solution 100 and has a lower specific gravity than the foamable solution 100 at the interface between the foamable solution 100 stored in the liquid leading section 20 and the compressed gas 200 sent from the outside. Accordingly, it is possible to reduce the gas mixture into the foamable solution 100. A liquid used in the gas separation film 51 can be introduced into the liquid leading section 20 before the compressed gas 200 is sent using the gas supply pipe 40 sending the compressed gas 200.

Note that, here, an example in which the gas separation film 51 is disposed as a layer of the liquid film at the interface has been described here, but the invention is not limited thereto. For example, a film-shaped lid formed of a solid material that floats in the foamable solution 100 and is not combined with the foamable solution 100 may be disposed at the interface between the foamable solution 100 and the compressed gas 200, so that a ratio in which the compressed gas 200 is mixed into the foamable solution 100 can be reduced.

Fig. 4 is a diagram illustrating a method of inflating a balloon inside the liquid leading section 20 as a method of preventing the compressed gas 200 from being mixed into the foamable solution 100. As illustrated in Fig. 4, a balloon 52 formed of a rubber material which is not combined with the foamable solution 100 and is flexible may be disposed at the front end of the gas supply pipe 40 and the compressed gas 200 is sent into the balloon 52, so that the foamable solution 100 and the compressed gas 200 can be separated from each other.

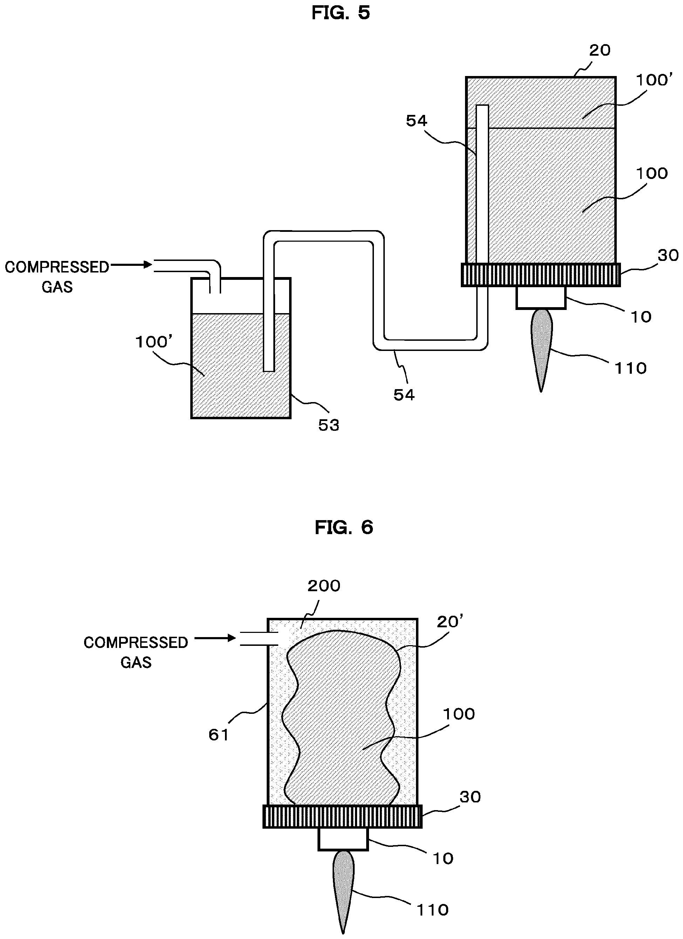

Figs. 5 to 7 are diagrams illustrating another configuration example of pressurizing means for pressurizing the foamable solution 100 and ejecting the foamable solution from the nozzle section 10. Among these, Fig. 5 is a diagram illustrating a method using a foamable solution 100' which is the same as the foamable solution 100 instead of the compressed gas 200. In Fig. 5, the configuration of the liquid film cartridge is the same as that of Fig. 2.

In the example illustrated in Fig. 5, a pressurization solution tank 53 is provided separately from the liquid film cartridge of this embodiment and the same foamable solution 100' as the foamable solution 100 introduced into the liquid leading section 20 as the liquid sample is stored in the pressurization solution tank 53. Further, a liquid supply pipe 54 is provided instead of the gas supply pipe 40 and the liquid film cartridge communicates with the pressurization solution tank 53 by the liquid supply pipe 54. Then, a compressed gas is sent to the pressurization solution tank 53 so that the foamable solution 100' stored in the pressurization solution tank 53 is sent to the liquid leading section 20 through the liquid supply pipe 54 at a pressure for appropriately generating a liquid film. Accordingly, the amount of the foamable solution 100 required for spectroscopic measurement is extruded into the nozzle section 10.

Note that, air bubbles are generated until the pressurization foamable solution 100' sent from the pressurization solution tank 53 to the liquid leading section 20 of the liquid film cartridge reaches the liquid leading section 20 through the liquid supply pipe 54. For that reason, the foamable solution 100' is sent to the liquid leading section 20 while the air bubbles are mixed with the solution. However, the foamable solution 100' containing the air bubbles is pressurized at a constant pressure and the foamable solution 100 which is stored in the liquid leading section 20 and is a measurement target can be sent to the nozzle section 10 by a suitable amount necessary for the measurement.

Here, the pressurization solution tank 53 and the compressed gas are used as a configuration for sending the pressurization foamable solution 100' to the liquid leading section 20, but the invention is not limited thereto. For example, a syringe may be used instead of the pressurization solution tank 53 so that the foamable solution 100' stored in the syringe is pressurized by a piston so that the foamable solution 100' may be sent from the syringe to the liquid leading section 20 through the liquid supply pipe 54.

Fig. 6 is a diagram illustrating still another configuration example of pressurizing means for pressurizing the foamable solution 100 so that the foamable solution is ejected from the nozzle section 10. In the example illustrated in Fig. 6, a flexible material is used as a container of a liquid leading section 20'. This container is deformed by receiving a pressure caused by the compressed gas 200 from the outside. However, a portion connected to the nozzle attachment cap 30 is formed so as not to be deformed even when a pressure caused by the compressed gas 200 is applied thereto so that the condition described in Fig. 1 is satisfied.

Further, the liquid leading section 20' formed as a flexible container is disposed inside the pressurized gas container 61 which is not deformed even when a pressure caused by the compressed gas 200 is applied thereto. Then, when the compressed gas 200 is sent into the pressurized gas container 61, the liquid leading section 20' is deformed by the pressure of the compressed gas 200, so that the foamable solution 100 stored inside the liquid leading section 20' is sent to the nozzle section 10.

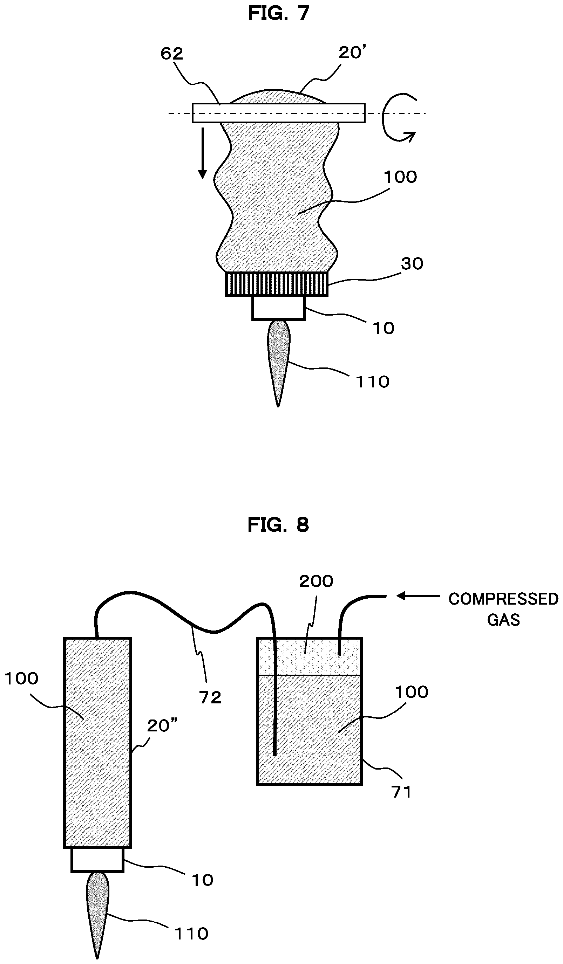

Fig. 7 is a diagram illustrating an example in which a pressure roller 62 having a mechanical structure is used instead of the compressed gas 200 as a means for deforming the liquid leading section 20' illustrated in Fig. 6. For example, the pressure roller 62 is configured as two columnar rollers and the flexible liquid leading section 20' is sandwiched between two rollers. Then, the pressure roller 62 is moved toward the lower side of the liquid leading section 20' while rotating two rollers in the opposite directions, so that the foamable solution 100 stored in the liquid leading section 20' is sent to the nozzle section 10.

As described above in detail, the liquid film cartridge of this embodiment includes the nozzle section 10 which ejects the foamable solution 100 and generates the liquid film in a space and the liquid leading section 20 which leads the foamable solution 100 to the nozzle section 10 and the outermost portion of the liquid ejecting port 11 of the nozzle section 10 and the inner wall 21 of the liquid leading section 20 are disposed with a gap therebetween so as to satisfy the first condition.

According to this embodiment with such a configuration, since a distance from the inner wall 21 generating the air bubbles 103 to the liquid ejecting port 11 increases in the liquid leading section 20 which is the flow path immediately before the foamable solution 100 reaches the nozzle section 10, it is possible to reduce the amount of the air bubbles entering from the liquid leading section 20 into the nozzle section 10. Accordingly, it is possible to stably generate a thin and flat liquid film appropriately transmitting or reflecting electromagnetic waves even when a liquid used as a sample is the foamable solution 100. As a result, it is possible to realize spectroscopic measurement in all wavelength regions where the characteristic data of the foamable solution has not been measured until now.

That is, if the liquid film generation device of this embodiment is used, it is possible to measure the liquid state at the molecular level of the foamable solution having a dissolved gas in real time according to the in-situ observation. As a result, it is possible to instantly measure a change in molecular bonding state in the foamable solution, a change in solution temperature due to temperature control, and the like. For example, it is possible to quickly and easily specify various conditions by changing manufacturing conditions such as an influence of gas molecules of sparkling beverages such as carbonated drinks and sparkling alcoholic beverages that have been difficult to measure on the taste and to largely contribute to industrial applications such as new product development and quality control.

The liquid film generation device of this embodiment can be widely applied to spectroscopic measurement using electromagnetic waves such as terahertz waves and infrared rays. That is, the liquid film generation device can be widely used for a spectroscopic device for obtaining information on intermolecular interactions in a solution, which is characterized by non-contact, non-destructive, non-invasive, and instantaneous measurement performance. Further, in the above-described embodiment, an example in which the liquid film 110 is generated from the foamable solution 100 has been described, but it goes without saying that a thin and flat liquid film can be stably generated from a liquid that does not have foamable property. This also applies to various modified examples described below.

Note that, in the above-described embodiment, the first condition has been described as the condition of the predetermined separation relationship which should be satisfied by the outermost portion of the liquid ejecting port 11 of the nozzle section 10 and the inner wall 21 of the liquid leading section, but the invention is not limited thereto. For example, as the condition of the predetermined separation relationship, a second condition in which a distance (R₂₀-W₁₁) between the outermost portion of the liquid ejecting port 11 of the nozzle section 10 and the inner wall 21 of the liquid leading section 20 is set to be larger than a predetermined value in any direction perpendicular to the flow direction of the foamable solution 100 may be used instead of or in addition to the first condition. As long as this condition is satisfied, the nozzle section 10 may be disposed at a position eccentrically located from the center of the bottom surface of the liquid leading section 20.

Alternatively, as the condition of the predetermined separation relationship, a third condition in which the inner wall 21 of the liquid leading section 20 is located further outside the outer periphery of the opening at one end side of the nozzle section 10 may be used instead of or in addition to the first condition. Note that, the configuration of the liquid film cartridge illustrated in Fig. 1 is a configuration in which the third condition is also satisfied in addition to the first condition.

Further, in the above-described embodiment, a configuration example in which the liquid leading section 20 is configured as the container of the foamable solution 100 and the foamable solution 100 is led to the nozzle section 10 by an external pressure has been described, but the invention is not limited thereto. For example, as illustrated in Fig. 8, a liquid leading section 20" may be a linear flow shaping pipe in which the foamable solution 100 supplied from the container 71 storing the foamable solution 100 through the solution tube 72 is led to the nozzle section 10 by adjusting the linear flow into a straight linear shape.

In the case of the configuration illustrated in Fig. 8, a compressed gas is injected into the container 71 storing the foamable solution 100. The foamable solution 100 which is extruded into the solution tube 72 due to the pressure is transmitted to the linear flow shaping pipe 20" through the solution tube 72 and reaches the nozzle section 10 through the linear flow shaping pipe 20". The linear flow shaping pipe 20" has a function of improving the stability of the liquid film generated by the nozzle section 10 by linearly adjusting the turbulence of the linear flow generated by the solution tube 72 that is freely deformed during the transmission of the solution.

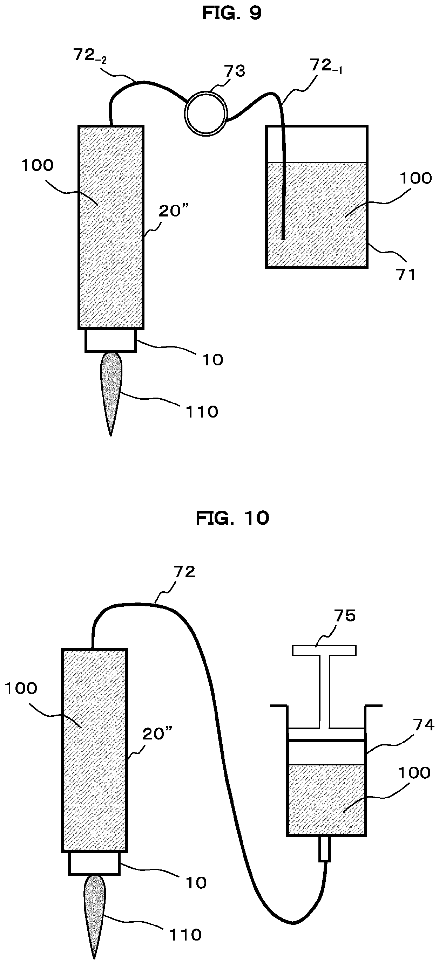

When the linear flow shaping pipe 20" is used as the liquid leading section, means for leading the foamable solution 100 from the container 71 to the linear flow shaping pipe 20" is not limited to the compressed gas illustrated in Fig. 8. For example, as illustrated in Fig. 9, a tube pump 73 may be used. The tube pump 73 sucks the foamable solution 100 from the container 71 through a solution tube 72₋₁, pressurizes the sucked foamable solution 100, and leads the foamable solution to the linear flow shaping pipe 20" through a solution tube 72₋₂.

Further, as illustrated in Fig. 10, a syringe 74 and a piston 75 may be used as means for leading the foamable solution 100 from the container 71 to the linear flow shaping pipe 20". In the example illustrated in Fig. 10, the foamable solution 100 stored in the syringe 74 is pressurized by the piston 75 using the syringe 74 as the container storing the foamable solution 100 so that the foamable solution 100 is sent from the syringe 74 to the linear flow shaping pipe 20" through the solution tube 72.

Note that, in any method of Figs. 8 and 9, the liquid film can be generated from the foamable solution 100, but a method of using a pressure controlled gas is most suitable for the stable liquid film generation.

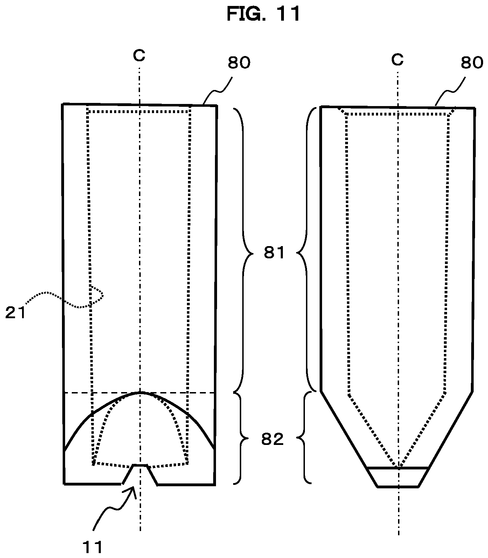

Further, in the above-described embodiment, a configuration example in which the nozzle section 10 and the liquid leading section 20 are connected to each other has been described, but the invention is not limited thereto. For example, as illustrated in Fig. 11, the nozzle section and the liquid leading section may be integrally formed as a pipe body 80 having a predetermined length, a portion from one end of the pipe body 80 to a middle portion in a direction toward the other end side may be a liquid leading section 81, and a portion from the middle portion to the other end may be a nozzle section 82. Note that, a dotted line indicates the inner wall of the pipe body 80 in Fig. 11.

In the liquid film cartridge illustrated in Fig. 11, the nozzle section 82 which corresponds to a portion from the middle portion of the cylindrical pipe body 80 to the other end thereof is formed in a tapered shape having a gentle inclination. This tapered portion is formed on the front surface side and the rear surface side so as to be symmetrical with respect to a center axis C of the pipe body 80. The tapered portion is formed so that a gap between the front surface side tapered portion and the rear surface side tapered portion becomes narrower as it goes toward the lower side (the front end side) of the pipe body 80 and the front end portion having a minimum gap is the liquid ejecting port 11. In this configuration, the liquid ejecting port 11 at the front end of the nozzle section 82 and the inner wall 21 of the liquid leading section 81 are configured to satisfy, for example, the first condition.

In addition, each of the above-described embodiments is merely an example of the embodiment when implementing the invention and the technical scope of the invention should not be limitedly interpreted thereby. That is, the invention can be implemented in various forms without departing from the spirit or the main features thereof.

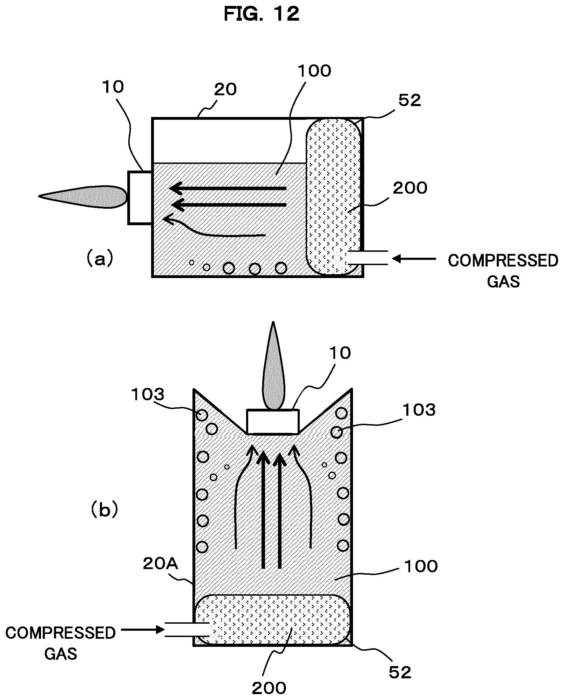

For example, in the above-described embodiment, an example in which the liquid film cartridge is used so that the nozzle section 10 faces the lower side (the direction of gravity) and the foamable solution 100 is ejected downward to generate the liquid film 110 has been described, but the invention is not limited thereto. For example, as illustrated in Fig. 12(a), the liquid film cartridge may be used in the horizontal direction to eject the foamable solution 100 in the horizontal direction. Further, as illustrated in Fig. 12(b), the liquid film cartridge may be used so that the nozzle section 10 faces upward and the foamable solution 100 may be ejected upward. Note that, here, a configuration example in which the balloon 52 is used to pressurize the foamable solution 100 is illustrated.

When the nozzle section 10 faces upward as illustrated in Fig. 12(b), an upper end of a liquid leading section 20A may be formed in an M shape so that the peripheral portion of the nozzle section 10 protrudes upward. Note that, the peripheral portion of the nozzle section 10 need only protrude upward in relation to the opening at the connection portion between the nozzle section 10 and the liquid leading section 20A and an example in which the upper end of the liquid leading section 20A has an M shape is merely an example. With this configuration, since the air bubbles 103 that are floated by the buoyancy are accumulated in the protruding portion formed in the peripheral portion of the nozzle section 10 at the upper end of the liquid leading section 20A, it is possible to suppress the air bubbles 103 from being mixed in the nozzle section 10.

Further, in the above-described embodiment, in order to suppress the generation of the air bubbles 103, a method of applying a coating that inhibits wettability to the surface of the inner wall 21 by applying a surfactant to the inner wall 21 of the liquid leading section 20 may be used together.

### Reference Signs List

- 10: Nozzle section
- 11: Liquid ejecting port
- 20, 20', 20", 20A: Liquid leading section
- 21: Inner wall
- 100: Foamable solution

## Claims

1. A liquid film generation device which is used in a spectroscopic device for measuring characteristics of electromagnetic waves transmitted through or reflected by a liquid sample by disposing the liquid sample in a path transmitting electromagnetic waves and generates a liquid film as the liquid sample, the liquid film generation device comprising:
a nozzle section which ejects a liquid and generates a plate-shaped liquid film having a flat surface in a space;
a liquid leading section which leads the liquid to the nozzle section; and
pressurizing means for pressurizing the liquid in the liquid leading section and ejecting the liquid from the nozzle section,
wherein an outermost portion of a liquid ejecting port corresponding to an opening for ejecting the liquid in the nozzle section and an inner wall of the liquid leading section are disposed with a gap therebetween so as to satisfy a condition of a predetermined separation relationship.

2. The liquid film generation device according to claim 1,
wherein the nozzle section is disposed in the vicinity of a center of a cross-section perpendicular to a direction in which the liquid flows through the liquid leading section, and
wherein as the condition of the predetermined separation relationship, a size of the liquid leading section in one direction is set to be larger than a size of the liquid ejecting port in the one direction so as to satisfy a first condition in which a ratio between a size from a center of the liquid ejecting port of the nozzle section to the outermost portion in the one direction perpendicular to the liquid flow direction and a size from a center of the liquid leading section to the inner wall in the one direction is larger than a predetermined ratio.

3. The liquid film generation device according to claim 2,
wherein as the condition of the predetermined separation relationship, a second condition in which a distance between the outermost portion of the liquid ejecting port of the nozzle section and the inner wall of the liquid leading section is larger than a predetermined value in any direction perpendicular to the liquid flow direction is satisfied instead of or in addition to the first condition.

4. The liquid film generation device according to claim 2,
wherein the nozzle section is a pipe body having a predetermined length in a direction parallel to the direction in which the liquid flows through the liquid leading section,
wherein the liquid leading section is a tubular solution supply structure which is connected to the pipe body constituting the nozzle section and has a predetermined length in the liquid flow direction,
wherein one end of the pipe body is provided with an opening communicating with the solution supply structure and the other end of the pipe body is provided with the liquid ejecting port smaller than the opening, and
wherein as the condition of the predetermined separation relationship, a third condition in which the inner wall of the solution supply structure is located further outside an outer periphery of the opening is satisfied instead of or in addition to the first condition.

5. The liquid film generation device according to claim 4,
wherein a size of the nozzle section in a direction perpendicular to the one direction is set to be larger than the size of the liquid ejecting port in the one direction so as to satisfy a condition that a ratio between the size of the liquid ejecting port of the nozzle section in the one direction and the size of the nozzle section in a direction perpendicular to the one direction is smaller than a predetermined ratio.

6. The liquid film generation device according to any one of claims 1 to 5,
wherein the liquid leading section is a container which stores the liquid and leads the liquid to the nozzle section by receiving an external pressure.

7. The liquid film generation device according to any one of claims 1 to 5,
wherein the liquid leading section is a linear flow shaping pipe which leads the liquid supplied from a container storing the liquid to the nozzle section by adjusting its linear flow into a linear shape.

8. The liquid film generation device according to any one of claims 1 to 3,
wherein the nozzle section and the liquid leading section are integrally formed as a pipe body having a predetermined length, a portion from one end of the pipe body to a middle portion in a direction toward the other end side is the liquid leading section, and a portion from the middle portion to the other end is the nozzle section.

9. The liquid film generation device according to claim 6,
wherein the pressurizing means is configured as a compressed gas supply device which supplies a compressed gas to the liquid leading section.

10. A liquid film cartridge which is used in a spectroscopic device for measuring characteristics of electromagnetic waves transmitted through or reflected by a liquid sample by disposing the liquid sample in a path transmitting electromagnetic waves and generates a liquid film as the liquid sample, the liquid film cartridge comprising:
a nozzle section which ejects a liquid and generates a plate-shaped liquid film having a flat surface in a space; and
a liquid leading section which leads the liquid to the nozzle section,
wherein an outermost portion of a liquid ejecting port corresponding to an opening for ejecting the liquid in the nozzle section and an inner wall of the liquid leading section are disposed with a gap therebetween so as to satisfy a condition of a predetermined separation relationship.

11. The liquid film cartridge according to claim 10,
wherein the nozzle section is disposed in the vicinity of a center of a cross-section perpendicular to a direction in which the liquid flows through the liquid leading section, and
wherein as the condition of the predetermined separation relationship, a size of the liquid leading section in one direction is set to be larger than a size of the liquid ejecting port in the one direction so as to satisfy a first condition in which a ratio between a size from a center of the liquid ejecting port of the nozzle section to the outermost portion in the one direction perpendicular to the liquid flow direction and a size from a center of the liquid leading section to the inner wall in the one direction is larger than a predetermined ratio.

12. The liquid film cartridge according to claim 11,
wherein as the condition of the predetermined separation relationship, a second condition in which a distance between the outermost portion of the liquid ejecting port of the nozzle section and the inner wall of the liquid leading section is larger than a predetermined value in any direction perpendicular to the liquid flow direction is satisfied instead of or in addition to the first condition.

13. The liquid film cartridge according to claim 11,
wherein the nozzle section is a pipe body having a predetermined length in a direction parallel to the direction in which the liquid flows through the liquid leading section,
wherein the liquid leading section is a tubular solution supply structure which is connected to the pipe body constituting the nozzle section and has a predetermined length in the liquid flow direction,
wherein one end of the pipe body is provided with an opening communicating with the solution supply structure and the other end of the pipe body is provided with the liquid ejecting port smaller than the opening, and
wherein as the condition of the predetermined separation relationship, a third condition in which the inner wall of the solution supply structure is located further outside an outer periphery of the opening is satisfied instead of or in addition to the first condition.

14. The liquid film cartridge according to claim 13,
wherein a size of the nozzle section in a direction perpendicular to the one direction is set to be larger than the size of the liquid ejecting port in the one direction so as to satisfy a condition that a ratio between the size of the liquid ejecting port of the nozzle section in the one direction and the size of the nozzle section in a direction perpendicular to the one direction is smaller than a predetermined ratio.
